# EUROPEAN PATENT SPECIFICATION

(11) **EP 4 053 423 B1**
(45) Date of publication and mention of the grant of the patent: **25.10.2023**
(21) Application number: 22157925.3
(22) Date of filing: 22.02.2022
(51) Int. Cl.: F16C 29/00, F16C 41/00, B65B 41/00, B65B 59/00, B65B 61/02

(54) **A PACKAGING MATERIAL PRODUCING MACHINE AND A METHOD OF POSITIONING A FUNCTIONAL UNIT ON THE MACHINE**
MASCHINE ZUR HERSTELLUNG VON VERPACKUNGSMATERIAL UND VERFAHREN ZUR POSITIONIERUNG EINER FUNKTIONSEINHEIT AUF DER MASCHINE
MACHINE DE PRODUCTION DE MATÉRIAU D'EMBALLAGE ET PROCÉDÉ DE POSITIONNEMENT D'UNE UNITÉ FONCTIONNELLE SUR LA MACHINE

(30) Priority: 25.02.2021 EP 21159297
(43) Date of publication of application: 07.09.2022
(73) Proprietor: Tetra Laval Holdings & Finance S.A., 1009 Pully (CH)
(72) Inventor: LEIJON, Håkan, 246 55 LÖDDEKÖPINGE (SE)
(74) Representative: Tetra Pak - Patent Attorneys SE

(56) References cited:
- EP-A2- 3 372 514
- WO-A1-2020/008047
- DE-A1- 19 917 852
- US-B1- 6 876 896

## Description

### Technical Field

The invention relates to a packaging material and/or packaging container producing machines comprising a positioning arrangement for use with. In particular, the present invention relates to an arrangement for linear positioning of a plurality of functional units of the packaging material producing machine.

### Background Art

Within the packaging industry, high performance machines are developed to produce individual packaging containers from a packaging material. The packaging material, which typically comprises a core layer of bulk material, and selectively at least a protective layer, being covered on both sides by one or more polymer layers, is produced as a continuous web in a high speed converting process where the width of the web of packaging material corresponds to multiple lanes. The width of each lane is dimensioned to form a packaging container. After the multiple lane packaging material is produced the packaging material is cut into a plurality of rolls, where each roll corresponds to a single lane. A resulting roll of packaging material can be loaded to a web-fed packaging container producing machine, or it may be cut into separate blanks which then are loaded to a blank-fed packaging container producing machine.

The packaging container producing machine receives the laminated packaging material and a plurality of stations provide the required processing of the packaging material. Such stations may e.g. include feeding, sterilization, tube forming, filling, sealing and cutting, and final forming in order to provide a flow of individual ready-to-use packages.

In modern machines the web of packaging material is running at extremely high speed; machine speeds allowing for up to 40.000 packages per hour are commercially available. Also during converting, i.e. during the process of lamination and production of the packaging material high speed are utilized, whereby the speed of the web is typically in the order of e.g. 400 m/min and above.

Manufacturing of the web of packaging material, as well as transportation of the web through the filling machine, requires high precision position control. For example, manufacturing of the packaging material may include the step of providing folding crease lines, pre-cut holes, and printed patterns such as register marks and/or decor. Especially the printing step may be performed in separate steps, and the appearance of the final package will be dependent on the alignment of the different features. Hence, uncontrolled variations in the positioning of the packaging material during production in the converting factory or in the filling machine may induce various types of errors.

It is therefore not only desirable to provide high precision alignment between the pre-laminated hole and the crease lines, but also to provide high precision alignment of the printed pattern relative the crease lines, the pre-cut hole, external devices such as caps and similar, as well as relative previous printed patterns.

Yet further it is desirable to add unique information to the web of packaging material. Such information may e.g. be related to manufacturing date, the converting factory, etc. for traceability and/or authentication purposes. The information may e.g. be provided in a coded format, or readable characters or images may be used.

A unique code can also be used for tracking errors and/or deviations in converting, and such marks may additionally facilitate defect removal.

Marking of the packaging material may thus be performed for different purposes, i.e. either to provide unique information or to provide reference marks for positioning. By reading the reference mark it will thus be possible to adjust for the position of the web of packaging material, especially in lateral or cross-wise direction. Subsequent printing, made by continuous printing techniques such as off-set printing or inkjet equipment, may thus be positioned correctly relative the reference mark, and hence also relative other features added to the packaging material.

One system for providing marks on packages is disclosed in WO2020008047 by the same applicant. In this system several marking devices are distributed across the width of the web of packaging material. Each marking device has a fixed position and is capable of producing a laser ablated mark on the web of packaging material. In order to provide marks with dynamic content, multiple laser outputs are independently controlled by means of a controller.

While the above-mentioned system provides significant advantages when it comes to printing of dynamic content on a web of packaging material, it is of great importance to set the correct position of each marking device. As the correct position is determined from the dimensions and specifications of the web of packaging material, the marking devices must be re-positioned each time a new web of packaging material is to be produced. Differences between packaging materials may e.g. include different width, different number of lanes, as well as different lateral position of the mark on the respective lanes. As the position of the marking device must be set with high accuracy, extensive labor is required for any re-positioning of the marking devices.

This problem is not only present for marking systems, but also for other equipment that may be used in packaging material producing machines or in packaging container producing machines. For example, these machines may be equipped with cleaning devices, cutting devices, inspection devices, or other printing devices that are distributed across the width of the packaging material, and wherein the correct position of each device is determined by characteristics of the web of packaging material.

Hence, it would be advantageous to provide a positioning arrangement which allows for rapid, high precision, and independent position control of a plurality of devices which are distributed across the width of a packaging material.

### Summary

It is an object of the invention to at least partly overcome one or more of the above-identified limitations of the prior art. In particular, it is an object to provide a positioning arrangement that can carry a plurality of functional units and to independently control the position of each functional unit across the width of the packaging material.

To solve these objects a packaging material producing machine comprising a positioning arrangement is provided. The packaging material producing machine comprising a transport device being configured to guide and move a web of packaging material, and a processing system comprising a functional unit connected to the at least one carrier and the positioning arrangement wherein the positioning arrangement comprises a fixed support and a bar arranged and moveable in parallel with said support, and at least one carrier comprising an attachment device being configured to selectively attach the carrier to only one of said fixed support and said bar.

The positioning arrangement may further comprise a linear drive unit connected to the bar. Accurate and precise movement of the bar, as well as the thereto connected carriers, is thereby accomplished.

The positioning arrangement may further comprise a linear encoder. The exact position of each carrier can thereby be monitored continuously, thereby ensuring the correct position of each carrier and the possibility to trigger any required correction.

The linear encoder may be arranged on a position rod arranged in parallel with said support and said bar. Preferably the position rod extends along the entire width of the fixed support such that the carrier positions can be monitored across the entire width of the web of packaging material.

Each carrier may be provided with a position indicator being detectable by said linear encoder. Hence the position of each carrier is always monitored as the position indicator is always arranged in detectable proximity to the position rod and the linear encoder.

The moveable bar may be arranged at a vertical distance from the fixed support. This allows for robust support for the carriers, especially when each carrier is configured to have a vertical extension covering the fixed support and the bar.

The attachment device of each carrier may comprise a support locking unit and a bar locking unit. Hence, the carrier can be selectively secured to the fixed support or to the moveable bar using separate locking units.

The support locking unit and the bar locking unit may be controlled by a common actuator. This ensures that only one of the locking units are in a locked mode.

The common actuator may be a pneumatic valve, which provides a simple yet robust solution for controlling the locking units.

The support locking unit and/or the bar locking unit may be a pneumatic brake cylinder. This provides a relatively low, still sufficient locking force for the carrier.

The functional unit may be selected from the group comprising a laser unit, a cutting unit, a cleaning unit, a printing unit, or a camera unit.

According to a second aspect a method for positioning a functional unit across the width of a web of packaging material on a packaging material producing machine as explained before is provided. The method comprises;
i) mounting the functional unit to a carrier of a positioning arrangement comprising a fixed support and a bar arranged and moveable in parallel with said support, said carrier being locked in position relative the support,
ii) releasing the carrier from the support while simultaneously locking the carrier to the bar,
iii) moving the bar and the carrier to the desired position, and
iv) releasing the carrier from the bar while simultaneously locking the carrier to the support.
Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a schematic view of parts of a packaging material producing machine, having a processing system according to an embodiment.
Fig. 2 is a schematic side vide of a processing system according to an embodiment, having a positioning arrangement.
Fig. 3 is an isometric view of a processing system according to an embodiment.
Fig. 4 is an isometric view of a positioning arrangement according to an embodiment.
Fig. 5 is a further isometric view of the positioning arrangement shown in Fig. 4.
Fig. 6 is a schematic view of a method for positioning a functional unit of a processing system according to an embodiment.

### Detailed description

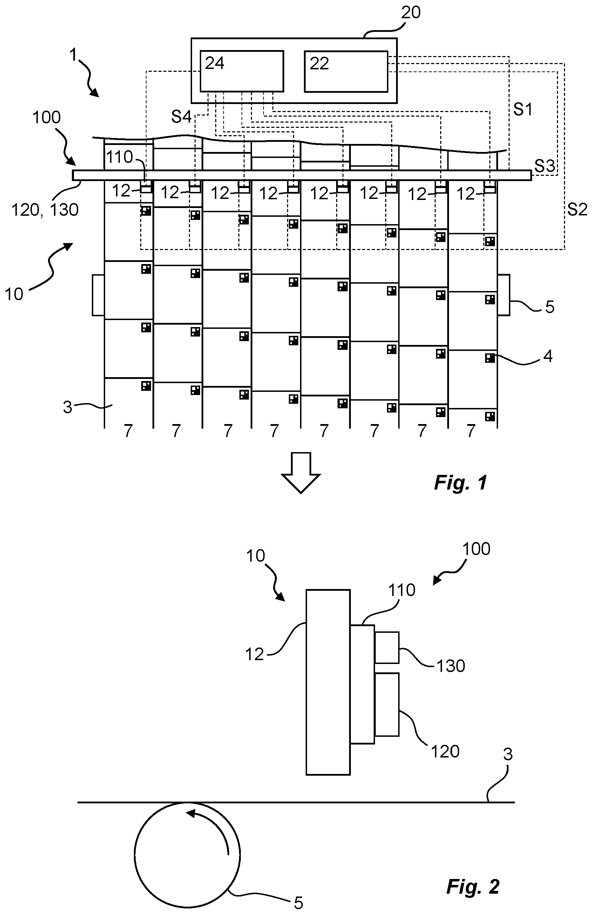

With reference to Fig. 1 parts of a packaging material producing machine 1 is schematically illustrated, as seen from above. The packaging material producing machine 1 may comprise various stations (not shown) for transforming different materials to a web of packaging material 3. For this, the packaging material producing machine 1 may be provided as a converting facility, where a core layer of a paperbased material is laminated with one or more polymer layers on both sides. Typically the web of packaging material 3 comprises a core material layer, an outer layer, and an inner layer.

The outer layer applied to one side of the core material layer is adapted to provide the outer surface of the package to be produced, which outer surface and outer layer faces the surroundings of the final package produced from the web of packaging material 3. The inner layer is applied to the other side of the core material layer and is adapted to provide the inner surface of the final package to be produced which is in contact with the product contained in the package.

The core material may be a sheet for providing rigidity to the web of packaging material 3, and may preferably be made of material such as paper board or cardboard.

The outer layer may comprise at least one layer of polymer material, which is applied to the core material layer in a lamination process. Moreover, one of the layers making up the outer layer may be a decorative layer making up the outer appearance of the package to be formed.

The inner portion of the laminated packaging material, on the inner, opposite side of the core layer, may comprise at least one layer of polymer material. The inner portion of the packaging material intended for the inside of the finished package, may e.g. comprise (starting from the core material layer): a lamination layer, a protective layer such as an Aluminum foil, functioning as a barrier against gases, such as oxygen gas, and a sealing layer. The lamination layer enables the core material to stick to any protective layer applied, while the sealing layer enables package heat sealing.

The polymer layers of the web of packaging material 3 may be of any suitable type of polymer material, particularly suitable to contact with food, preferably a thermoplastic material such as a polyolefin, such as polyethylene.

As is shown in Fig. 1 the packaging material producing machine 1 comprises a transport device 5 and a processing system 10. The transport device 5, here shown schematically as a roller, is configured to guide and move the web of packaging material 3 in the forward direction indicated by the block arrow.

The processing system 10 extends across the width of the web of packaging material 3 and comprises a positioning arrangement 100 and a plurality of functional units 12 connected to the positioning arrangement 100. Each functional unit 12 is configured to provide an action to or at the web of packaging material 3 passing it.

As will be explained further below, each functional unit 12 is connected to the positioning arrangement 100 by means of a carrier 110. Each carrier 110 is preferably universal, i.e. it can connect mechanically to a vast range of functional units 12 without substantial modifications. Hence, in one embodiment the carrier 110 is only connecting mechanically to the functional unit 12, whereby additional connections for the functional unit 12 such as power, signaling, etc. are provided at the functional unit 12 per se.

The positioning arrangement 100 further comprises a fixed support 120 and a moveable bar 130. Each carrier 110 is connected to the fixed support 120 or to the bar 130 as will be further explained below.

In Fig. 1 the web of packaging material 3 comprises eight lanes 7. Each lane 7 has a width corresponding to the required width in order to form individual packaging containers. Hence, when the web of packaging material 3 has been manufactured it is cut into eight portions, each portion corresponding to a single lane 7, whereby a single portion is used as input material for a packaging container producing machine (not shown).

The processing system 10 is configured to control the lateral position of each carrier 110 and its associated functional unit 12. Typically each functional unit 12 will have a fixed position during production of a specific web of packaging material 3. However, as soon as another type of web of packaging material 3 is to be produced, e.g. having a different width or a different number of lanes 7, the number and/or position of the carriers 110 needs to be adjusted accordingly.

The processing system 10 is therefore preferably connected to a control unit 20 configured to control the operation of the positioning arrangement 100 and optionally also the operation of the functional units 12. The control unit 20 is in one embodiment comprising a first module 22 connected to the positioning arrangement 100 and configured to receive a signal S1 corresponding to actual lateral positions of the carriers 110, to transmit a signal S2 for changing the mode of one or more carriers 110 from a fixed mode to a moveable mode, and to transmit a signal S3 for moving the carriers 110 which are in a moveable mode to their desired position. In addition to the first module 22, the control unit 20 may also comprise a second module 24 connected to the functional units 12 and configured to transmit control signals S4 to these.

In one example, the processing system 10 is configured to provide laser marks 4 onto the web of packaging material 3. In the embodiment shown in Fig. 1, laser marks 4 are provided on the web of packaging material 3 arranged downstream the processing system 10. In such embodiment each functional unit 12 is a laser head, which upon receipt of the control signal S4 is activated to expose the web of packaging material 3 to light and to thereby ablate visible marks 4.

Laser marking of a web of packaging material 3 has been previously described by the present applicant, e.g. in WO2020008047, and the technique and procedure for this process will not be described further herein.

In Fig. 2 the processing system 10 is shown in more detail. The positioning arrangement 100, forming part of the processing system 10, is designed such that the fixed support 120 and the moveable bar 130 extend in parallel and at a vertical distance from each other. The fixed support 120, here in the form of a rigid body, extends across the entire width of the web of packaging material 3, or at least such that it covers the width which may be used by the functional units 12. The moveable bar 130 is preferably also extending across the entire width of the web of packaging material 3, although it may be longer than the entire width of the web of packaging material 3 or it may be sufficient to only cover a part of the width of the web of packaging material 3 as long as the moveable bar 130 can be moved into position of each one of the carriers 110 and the thereto connected functional units 12.

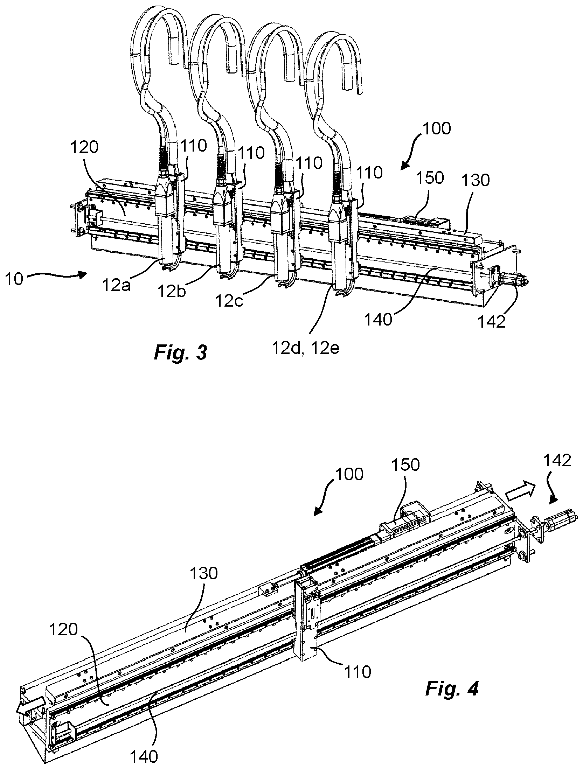

An example of a processing system 10 is shown in Fig. 3. Here, the positioning arrangement 100 is provided with four carriers 110, spaced apart along the extension of the positioning arrangement 100. Each carrier 110 is connected to a functional unit 12a-e.

The functional units 12a-e may be identical, or they may be different. For example, each functional unit 12a-e may be a laser head 12a, a cleaning device 12b, a cutting device 12c, an inspection device 12d such as a camera, or another printing device 12e such as e.g. an inkjet printing device. In another embodiment a single processing system 10 may have different functional units 12a-e.

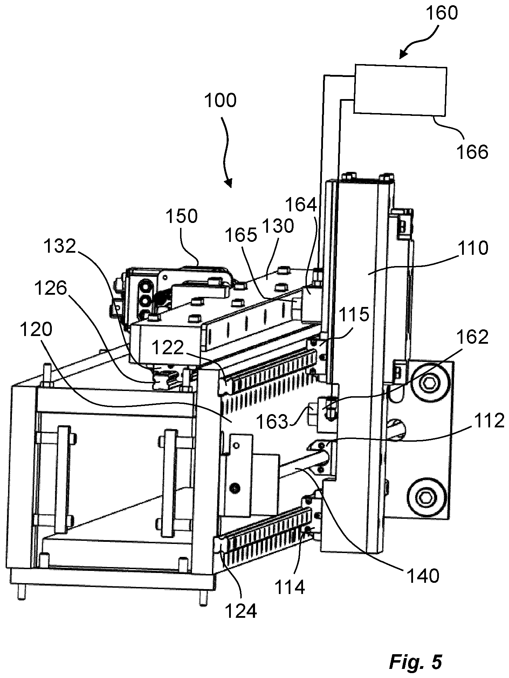

As is shown in Fig. 3, and further explained with reference to Figs. 4 and 5, the fixed support 120 is arranged at the bottom and central part of the positioning arrangement 100. The moveable bar 130 is arranged vertically above the fixed support 120, and extends in parallel and substantially along the entire width of the fixed support 120. Further, the positioning arrangement 100 has a position rod 140. The position rod 140 is arranged in parallel with the fixed support 120 and the moveable bar 130 and the length of the position rod 140 is substantially equal to the length of the fixed support 120.

Each carrier 110 is moveable along the fixed support 120, as well as along the position rod 140, by means of the moveable bar 130. For this, each carrier 110 is configured to be selectively connected to either the fixed support 120 or to the moveable bar 130. Once a carrier 110 is locked to the moveable bar 130 a drive unit 150, as illustrated in Fig. 4, is activated to drive the carrier 110 to its desired position. In some embodiments, the same carrier 110 may be driven several times to reach a desired position. To achieve that, the carrier may be unlocked from the movable bar 130 while being locked to the fixed support 120; and after the movable bar 130 comes to its initial position, the carrier 110 may be locked again to the movable bar 130 and be unlocked from the fixed support 120, and driven again by the drive unit 150. The drive unit 150 is preferably a linear motor configured to control a lateral movement of the moveable bar 130 such that one or more carriers 110 is moved from an actual position along the position rod 140 to a desired position.

For accurate positioning of the carrier 110 the position rod 140 is provided with a linear encoder 142. The linear encoder 142 extends along the length of the position rod 140 and is configured to detect the position of an indicator 112 (see Fig. 5). Each carrier 110 is provided with such position indicator 112, e.g. in the form of a magnet.

Now turning to Fig. 5 some further details of a positioning arrangement 100 are illustrated. In order to selectively fasten a carrier 110 to the fixed support 120 or the moveable bar 130 each carrier 110 is provided with an attachment device 160.

In the shown embodiment the attachment device 160 comprises a support locking unit 162 configured to fixate the carrier 110 to the fixed support 120, and a bar locking unit 164 configured to fixate the carrier 110 to the moveable bar 130. The support locking unit 162 and the bar locking unit 164 are preferably controlled by a common actuator 166. In one embodiment each one of the support locking unit 162 and the bar locking unit 164 is in the form of a brake cylinder, having a brake bad 163, 165 which is moveable towards and away from the fixed support 120 and the moveable bar 130, respectively. The common actuator 166 is preferably a pneumatic valve being connected to a pressurized air supply. The actuator 166 is either actuating the brake cylinder 162 operating at the fixed support 120, or actuating the brake cylinder 164 operating at the moveable bar 130. Hence, each carrier 110 is always either in a locked mode or a moveable mode. In the locked mode the actuator 166 is actuating the brake cylinder 162 acting on the fixed support 120, such that the brake pad 163 is pressed against a preferably planar surface of the fixed support 120. Due to the friction between the brake pad 163 and the fixed support 120, the carrier 110 has a fixed position. Upon receipt of the control signal S2 (see Fig. 1) the carrier will switch its current mode from a locking mode to a moveable mode. The actuator 166 will thus switch so that the pressure acting on the brake cylinder 162 is released and diverted to instead act on the brake cylinder 164 acting on the moveable bar 130. The associated brake pad 165 will then be pressed against a preferably planar surface of the moveable bar 130 such that the carrier 110 will be locked to the moveable bar 130 due to the friction between the brake pad 165 and the movable bar 130. As the moveable bar 130 is controlled to move, it will only cause a corresponding movement of the one or more carriers 110 currently being controlled in the moveable mode.

During motion of the carrier 110 the magnet 112, which is shown as a recessed member partly surrounding the position rod 140, will be readable by the linear encoder 142 so that the exact position of the carrier 110 is always monitored. When the desired positions of the moved carriers 110 are reached, the actuator 166 will again switch to change the mode of the moved carriers 110 from the current moveable mode to a locked mode.

In order to provide for smooth motion of the carriers 110 along the fixed support 120, the fixed support 120 is provided with an upper guide rail 122 and a lower guide rail 124 vertically spaced apart from the upper guide rail 122. The guide rails 122, 124 are arranged in parallel and extend along the width of the fixed support 120. Each carrier 100 is further provided with linear bearings 114, 115 to slide against the guide rails 122, 124. An upper linear bearing 115 is arranged to slide relative the upper guide rail 122, and a lower linear bearing 114 is arranged to slide relative the lower guide rail 124.

As can be seen in Fig. 5 the fixed support 120 is further provided with a top guide rail 126 against which a linear bearing 132 of the moveable bar 130 is sliding. Hence, low friction and well defined movement of the moveable bar 130 relative the fixed support 120 is enabled.

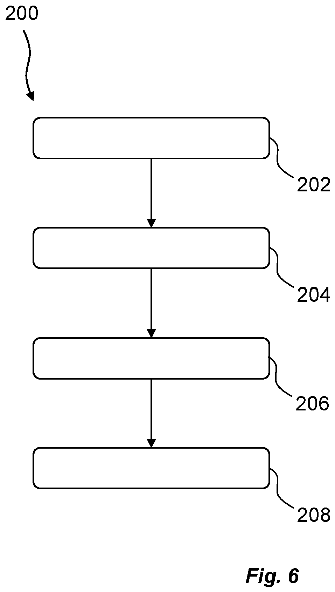

Now turning to Fig. 6 a method 200 is schematically illustrated. The method 200 is performed in order to position a functional unit across the width of a web of packaging material. As explained above, the functional unit may be any suitable unit for performing an action to the web of packaging material passing the functional unit. The functional unit may e.g. be a laser head, a cleaning unit, a cutting unit, an inspection unit, or a printing device.

The method 200 comprises a first step 202 of mounting the functional unit to a carrier of a positioning arrangement comprising a fixed support and a bar arranged and moveable in parallel with said support. Here, the carrier is locked in position relative the support.

In a subsequent step 204 the carrier is released from the support while simultaneously locking the carrier to the bar. Preferably, as explained above, this step is performed by switching an actuator connected to two brake cylinders.

In step 206 the bar, and the thereto locked carrier, is moved to the desired position before the method proceeds to a step 208 in which the carrier is released from the bar while simultaneously locking the carrier to the support.

The embodiments described above have proven to be very advantageous for accurate positioning and rearrangement of functional units 12 across the web of packaging material 3. Typically, the number of carriers 110 for the positioning arrangement is between 2 and 20, such as between 3 and 15. By the provision of the positioning arrangement, a precision of 0.2 mm across the entire width of the web of packaging material 3 can be achieved.

Advantageously there is only one actuator, e.g. the pneumatic valve 166, that operates both brake cylinders 162, 164, thereby resulting in that the carrier 110 is always locked to either the fixed support 120 or to the movable bar 130. Preferably, the carrier 110 is never free to move on its own.

The control unit 20 is preferably programmed to be provide continuous operation, i.e. as long as the positioning arrangement 100 is active all carrier 110 positions are monitored and optionally corrected automatically.

The use of brake pads 163, 165 has proven to result in a comparatively low force to overcome the friction, such as in the range of 30 to 50N. Exceeding this force will thus result in a movement of the carrier 110 rather than damaging it.

A significant benefit of this is that the positioning arrangement can be active even if the packaging material producing machine 1 is stopped; even if a carrier should move and an operator is too close to it the force will be so small that it will not harm the operator.

From the description above follows that, although various embodiments of the invention have been described and shown, the invention is not restricted thereto, but may also be embodied in other ways within the scope of the subject-matter defined in the following claims.

## Claims

1. A packaging material producing machine (1), comprising a transport device (5) being configured to guide and move a web of packaging material (3), and a processing system (10), **characterized in that** the processing system (10) comprises a functional unit (12) connected to the at least one carrier (110) and a positioning arrangement (100) that comprises a fixed support (120) and a bar (130) arranged and moveable in parallel with said support (120), and at least one carrier (110) comprising an attachment device (160) being configured to selectively attach the carrier (110) to only one of said fixed support (120) and said bar (130).

2. The packaging material producing machine (1) according to claim 1, wherein the positioning arrangement (100) further comprises a linear drive unit (150) connected to the bar (130).

3. The packaging material producing machine (1) according to claim 1 or 2, wherein the positioning arrangement (100) further comprises a linear encoder (142).

4. The packaging material producing machine (1) according to claim 3, wherein said linear encoder (142) is arranged on a position rod (140) arranged in parallel with said support (120) and said bar (130).

5. The packaging material producing machine (1) according to claim 3 or 4, wherein each carrier (110) is provided with a position indicator (112) being detectable by said linear encoder (142).

6. The packaging material producing machine (1) according to any of claims 1-5, wherein the bar (130) is arranged at a vertical distance from the fixed support (120).

7. The packaging material producing machine (1) according to any of claims 1-6, wherein each carrier (110) has a vertical extension covering the fixed support (120) and the bar (130).

8. The packaging material producing machine (1) according to any of claims 1-7, wherein the attachment device (160) of each carrier (110) comprises a support locking unit (162) and a bar locking unit (164).

9. The packaging material producing machine (1) according to claim 8, wherein the support locking unit (162) and the bar locking unit (164) are controlled by a common actuator (166).

10. The packaging material producing machine (1) according to claim 9, wherein the common actuator (166) is a pneumatic valve.

11. The packaging material producing machine (1) according to any one of claims 8-10, wherein the support locking unit (162) and/or the bar locking unit (164) is a pneumatic brake cylinder.

12. The packaging material producing machine (1) according to anyone of the preceding claims, wherein the functional unit (12) is selected from the group comprising a laser unit (12a), a cutting unit (12b), a cleaning unit (12c), or a camera unit (12d), or a printing unit (12e).

13. A method for positioning a functional unit across the width of a web of packaging material on a packaging material producing machine according to any one of the preceding claims, comprising:
i. mounting the functional unit to a carrier of a positioning arrangement comprising a fixed support and a bar arranged and moveable in parallel with said support, said carrier being locked in position relative the support,
ii. releasing the carrier from the support while simultaneously locking the carrier to the bar,
iii. moving the bar and the carrier to the desired position, and
iv. releasing the carrier from the bar while simultaneously locking the carrier to the support.

## Patentansprüche

1. Maschine (1) zur Herstellung von Verpackungsmaterial, umfassend eine Transportvorrichtung (5), die zum Führen und Bewegen einer Verpackungsmaterialbahn (3) ausgestaltet ist, und ein Verarbeitungssystem (10), **dadurch gekennzeichnet, dass** das Verarbeitungssystem (10) eine Funktionseinheit (12), die mit dem mindestens einen Träger (110) und einer Positionierungsanordnung (100) verbunden ist, die eine feststehende Stütze (120) und eine Stange (130) umfasst, die parallel zu der Stütze (120) angeordnet und parallel dazu beweglich ist, sowie mindestens einen Träger (110) umfasst, der eine Anbringvorrichtung (160) umfasst, die dazu ausgestaltet ist, den Träger (110) gezielt nur an der feststehenden Stütze (120) oder nur an der Stange (130) anzubringen.

2. Maschine (1) zur Herstellung von Verpackungsmaterial nach Anspruch 1, wobei die Positionierungsanordnung (100) ferner eine Linearantriebseinheit (150) umfasst, die mit der Stange (130) verbunden ist.

3. Maschine (1) zur Herstellung von Verpackungsmaterial nach Anspruch 1 oder 2, wobei die Positionierungsanordnung (100) ferner einen Lineargeber (142) umfasst.

4. Maschine (1) zur Herstellung von Verpackungsmaterial nach Anspruch 3, wobei der Lineargeber (142) an einer Positionsstange (140) angeordnet ist, die parallel zu der Stütze (120) und der Stange (130) angeordnet ist.

5. Maschine (1) zur Herstellung von Verpackungsmaterial nach Anspruch 3 oder 4, wobei jeder Träger (110) mit einer Positionsanzeige (112) versehen ist, die von dem Lineargeber (142) erfassbar ist.

6. Maschine (1) zur Herstellung von Verpackungsmaterial nach einem der Ansprüche 1 - 5, wobei die Stange (130) mit einem vertikalen Abstand von der feststehenden Stütze (120) angeordnet ist.

7. Maschine (1) zur Herstellung von Verpackungsmaterial nach einem der Ansprüche 1 - 6, wobei jeder Träger (110) eine vertikale Erstreckung hat, die die feststehende Stütze (120) und die Stange (130) abdeckt.

8. Maschine (1) zur Herstellung von Verpackungsmaterial nach einem der Ansprüche 1 - 7, wobei die Anbringvorrichtung (160) jedes Trägers (110) eine Stützenarretierungseinheit (162) und eine Stangenarretierungseinheit (164) umfasst.

9. Maschine (1) zur Herstellung von Verpackungsmaterial nach Anspruch 8, wobei die Stützenarretierungseinheit (162) und die Stangenarretierungseinheit (164) von einem gemeinsamen Aktuator (166) gesteuert werden.

10. Maschine (1) zur Herstellung von Verpackungsmaterial nach Anspruch 9, wobei der gemeinsame Aktuator (166) ein Pneumatikventil ist.

11. Maschine (1) zur Herstellung von Verpackungsmaterial nach einem der Ansprüche 8 - 10, wobei die Stützenarretierungseinheit (162) und/oder die Stangenarretierungseinheit (164) ein pneumatischer Bremszylinder ist.

12. Maschine (1) zur Herstellung von Verpackungsmaterial nach einem der vorhergehenden Ansprüche, wobei die Funktionseinheit (12) aus der eine Laser-Einheit (12a), eine Schneideinheit (12b), eine Reinigungseinheit (12c) oder eine Kameraeinheit (12d) oder eine Druckeinheit (12e) umfassenden Gruppe ausgewählt ist.

13. Verfahren zur Positionierung einer Funktionseinheit über der Breite einer Verpackungsmaterialbahn an einer Maschine zur Herstellung von Verpackungsmaterial nach einem der vorhergehenden Ansprüche, umfassend:
i. Montieren der Funktionseinheit an einen Träger einer Positionierungsanordnung, die eine feststehende Stütze und eine Stange umfasst, die parallel zu der Stütze angeordnet und parallel dazu beweglich ist, wobei der Träger bezüglich der Stütze in seiner Position arretiert wird,
ii. Freigeben des Trägers von der Stütze, während der Träger gleichzeitig an der Stange arretiert wird,
iii. Bewegen der Stange und des Trägers zu der gewünschten Position und
iv. Freigeben des Trägers von der Stange, während der Träger gleichzeitig an der Stütze arretiert wird.

## Revendications

1. Machine de production de matériau d'emballage (1), comprenant un dispositif de transport (5) qui est conçu pour guider et déplacer une bande de matériau d'emballage (3), et un système de traitement (10), **caractérisée en ce que** le système de traitement (10) comprend une unité fonctionnelle (12) raccordée à l'au moins un dispositif porteur (110) et un agencement de positionnement (100) qui comprend un support fixe (120) et une barre (130) disposée et mobile parallèlement audit support (120), et au moins un dispositif porteur (110) comprenant un dispositif de fixation (160) qui est conçu pour fixer sélectivement le dispositif porteur (110) sur un seul élément parmi ledit support fixe (120) et ladite barre (130) .

2. Machine de production de matériau d'emballage (1) selon la revendication 1, l'agencement de positionnement (100) comprenant en outre une unité d'entraînement linéaire (150) raccordée à la barre (130).

3. Machine de production de matériau d'emballage (1) selon la revendication 1 ou 2, l'agencement de positionnement (100) comprenant en outre un codeur linéaire (142).

4. Machine de production de matériau d'emballage (1) selon la revendication 3, ledit codeur linéaire (142) étant disposé sur une tige de position (140) disposée parallèlement audit support (120) et à ladite barre (130) .

5. Machine de production de matériau d'emballage (1) selon la revendication 3 ou 4, chaque dispositif porteur (110) étant pourvu d'un indicateur de position (112) qui peut être détecté par ledit codeur linéaire (142).

6. Machine de production de matériau d'emballage (1) selon l'une quelconque des revendications 1 à 5, la barre (130) étant disposée à une distance verticale du support fixe (120).

7. Machine de production de matériau d'emballage (1) selon l'une quelconque des revendications 1 à 6, chaque dispositif porteur (110) ayant une extension verticale recouvrant le support fixe (120) et la barre (130).

8. Machine de production de matériau d'emballage (1) selon l'une quelconque des revendications 1 à 7, le dispositif de fixation (160) de chaque dispositif porteur (110) comprenant une unité de verrouillage de support (162) et une unité de verrouillage de barre (164).

9. Machine de production de matériau d'emballage (1) selon la revendication 8, l'unité de verrouillage de support (162) et l'unité de verrouillage de barre (164) étant commandées par un actionneur commun (166).

10. Machine de production de matériau d'emballage (1) selon la revendication 9, l'actionneur commun (166) étant une soupape pneumatique.

11. Machine de production de matériau d'emballage (1) selon l'une quelconque des revendications 8 à 10, l'unité de verrouillage de support (162) et/ou l'unité de verrouillage de barre (164) étant un cylindre de frein pneumatique.

12. Machine de production de matériau d'emballage (1) selon l'une quelconque des revendications précédentes, l'unité fonctionnelle (12) étant choisie dans le groupe comprenant une unité laser (12a), une unité de coupe (12b), une unité de nettoyage (12c), ou une unité de caméra (12d) ou une unité d'impression (12e).

13. Procédé pour le positionnement d'une unité fonctionnelle sur la largeur d'une bande de matériau d'emballage sur une machine de production de matériau d'emballage selon l'une quelconque des revendications précédentes, comprenant :
i. le montage de l'unité fonctionnelle sur un dispositif porteur d'un agencement de positionnement comprenant un support fixe et une barre disposée et mobile parallèlement audit support, ledit dispositif porteur étant verrouillé en position par rapport au support,
ii. la libération du dispositif porteur du support tout en verrouillant simultanément le dispositif porteur à la barre,
iii. le déplacement de la barre et du dispositif porteur jusqu'à la position souhaitée, et
iv. la libération du dispositif porteur de la barre tout en verrouillant simultanément le dispositif porteur au support.
